# EUROPÄISCHE PATENTSCHRIFT

(11) **EP 0 837 266 B1**
(45) Veröffentlichungstag und Bekanntmachung des Hinweises auf die Patenterteilung: **06.03.2002**
(21) Anmeldenummer: 97115703.7
(22) Anmeldetag: 10.09.1997
(51) Int. Cl.: F16H 59/04, F16H 59/10

(54) **Wählvorrichtung für ein Automatikgetriebe eines Kraftfahrzeuges**
Selecting device for an automatic transmission of a vehicle
Dispositif de sélection pour une transmission automatique d'un véhicule

(30) Priorität: 13.09.1996 DE 19637254
(43) Veröffentlichungstag der Anmeldung: 22.04.1998
(73) Patentinhaber: ZF Lemförder Metallwaren AG, 49448 Lemförde (DE)
(72) Erfinder: Ersoy, Metin, Dr., 65396 Walluf (DE); Tiemeyer, Detlev, 49525 Lengerich (DE); Kalz, Wolfgang, 49084 Osnabrück (DE)

(56) Entgegenhaltungen:
- EP-A- 0 620 385
- DE-A- 4 029 330
- US-A- 4 912 997
- US-A- 5 229 742
- US-A- 5 551 266

## Beschreibung

Die Erfindung betrifft eine Wählvorrichtung für ein Automatikgetriebe eines Kraftfahrzeuges nach dem Oberbegriff des Patentanspruches 1.

In Wählvorrichtungen, die über Gestänge, Seilzüge oder andere mechanische Übertragungsglieder mit dem Kraftfahrzeuggetriebe verbunden sind, sind die zur Gangwahl aufzuwendenden Betätigungskräfte konstruktiv vorgegeben. Bei der Anwahl einer Fahrstufe muß vom Fahrzeugführer ein Widerstand überwunden werden, der ihm ein Schaltgefühl vermittelt. Das Einlegen eines Getriebeganges ist für ihn somit spürbar. Im Gegensatz dazu werden bei elektronisch gesteuerten Wählvorrichtungen für Kraftfahrzeuggetriebe, die mechanisch von der Motor-Getriebe-Einheit entkoppelt sind, oftmals die für das Schalten aufzuwendenden Kräfte simuliert, um dem Fahrzeugführer ein Gefühl des Schaltens zu vermitteln.

Aus der EP 0 620 385 A1 ist eine Wählvorrichtung für ein Automatikgetriebe eines Kraftfahrzeuges nach dem Oberbegriff des Anspruchs 1 bekannt, die ein in einem Gehäuse um eine erste Achse schwenkbar gelagertes Kreuzstück aufweist, in dem ein um eine zweite Achse schwenkbar gelagerter Wählhebel aufgenommen ist. Die Schwenkachsen sind dabei annähernd orthogonal, jedoch räumlich versetzt zueinander angeordnet. An dem Wählhebel sind federbelastete Rastmittel vorgesehen, die mit einer ansteigenden Kontur des Kreuzstückes zusammenwirken. Die Bewegungen des Wählhebels werden über Sensoren erfaßt und in einer Steuerelektronik verarbeitet.

Aus der DE 40 29 330 A1 geht darüber hinaus eine Wähleinrichtung hervor, bei der eine um eine Achse an dem Wählhebel angelenkte und federnd gegen ein Rastglied positionierte Klinke mit einer profilierten Oberfläche versehen ist und zur Festlegung des Wählhebels in je einer der beiden Schaltgassen, wobei die erste Schaltgasse (Automatikschaltgasse) zur Anwahl sämtlicher Automatikschaltfunktionen, also auch des Rückwärtsganges, und die zweite Schaltgasse (Schrittschaltgasse) zum manuellen schrittweisen Schalten vorgesehen ist.

Schließlich ist in der EP 0 568 928 A1 eine Wahlvorrichtung mit einem in einem Gehause an einem Kreuzstück schwenkbar gelagerten Wählhebel beschrieben, wobei mit dem Kreuzstück ein hülsenförmiges Teil verbunden ist, welches die Positionierung des Wählhebels in den Wähl- und Schaltgassen durch das Zusammenwirken eines in das hülsenförmige Teil eingesetzten, federbelasteten Rastmittels mit einer profilierten Oberfläche an dem Gehäuse der Wählvorrichtung ermöglicht. Ein selbsttätiges Zurückführen des Wählhebels in seine Ausgangposition geht aus der Schrift nicht hervor

Aufgabe der Erfindung ist es, eine Wählvorrichtung für ein Automatikgetriebe eines Kraftfahrzeuges zu schaffen, die ohne mechanische Übertragungsglieder bei einfachem Aufbau bei der Anwahl der Automatikfahrstufen der Wählbewegung eine definierbare Kraft entgegensetzt und den Wählhebel selbsttätig in seine Ausgangslage zurückführt, wobei nach der Anwahl des Rückwärtsganges der Wählhebel in dieser Stellung festgelegt sein soll.

Gelöst wird diese Aufgabenstellung mit den kennzeichnenden Merkmalen des Patentanspruches 1. Ausgestaltungen der Erfindung sind Gegenstand der Unteransprüche.

Eine erfindungsgemäße Wählvorrichtung für ein Automatikgetriebe eines Kraftfahrzeuges weist einen Wählhebel auf, an dessen oberem, dem Fahrzeugführer zugewandten Ende sich ein Wählknauf befindet. Der Wählhebel ist über ein ihn aufnehmendes Kreuzstück in einem Gehäuse der Wählvorrichtung gelagert.
Der Wählhebel, ist zudem um eine erste Achse schwenkbar in dem Kreuzstück gelagert.
Das Kreuzstück wiederum ist in Lagerbuchsen um eine zweite Achse in dem Gehäuse schwenkbar angeordnet. Die erste und die zweite Achse stehen annähernd orthogonal, jedoch vorzugsweise räumlich versetzt zueinander. Das Kreuzstück geht unterhalb der Lagerstelle im Gehäuse in einen bogenförmigen Bereich über.
In seinem unteren, dem Fahrzeugführer abgewandten Bereich, weist der Wählhebel einen federnd abgestützten, axial beweglichen Schieber mit Rastiermitteln auf. Denkbar sind als Rastiermittel beispielsweise federbelastete Rollen, Walzen, Kugeln oder dergleichen. Die Rastiermittel stehen mit wenigstens einer Gleitfläche in dem bogenförmigen Bereich des Kreuzstückes in Kontakt. An diesem bogenförmigen Bereich des Kreuzstückes ist zudem eine federnd positionierte und um eine Achse schwenkbare Klinke gelagert. Dieses Klinke kann einteilig oder mehrteilig sein. Sie dient der Rastierung des Wählhebels in der dem Rückwärtsgang entsprechenden Fahrstufe. Außerdem weist das Kreuzstück zusätzlich wenigstens ein Rastmittel auf, welches die Positionierung des Wählhebels in den jeweiligen Wählgassen ermöglicht.

Bei einer erfindungsgemäßen Wählvorrichtung lassen sich in einfacher Weise viele Zusatzfunktionen, die bei einer mechanischen Schaltungvorrichtung oft nur mit einem nicht unerheblichen Mehraufwand realisiert werden können, integrieren. So ist es beispielsweise möglich, die Stellung des Wählhebels in einfacher Weise zu erfassen und an eine Steuerelektronik weiterzuleiten.

In der Zeichnung ist ein bevorzugtes Ausführungsbeispiel des Erfindungsgegenstandes gezeigt und wird nachfolgend beschrieben.

Es zeigen:
**Figur 1:** Eine Schnittdarstellung einer erfindungsgemäßen Wählvorrichtung
**Figur 2:** Eine Schnittdarstellung einer erfindungsgemäßen Wählvorrichtung gemäß Schnittverlauf A-A in Figur 1

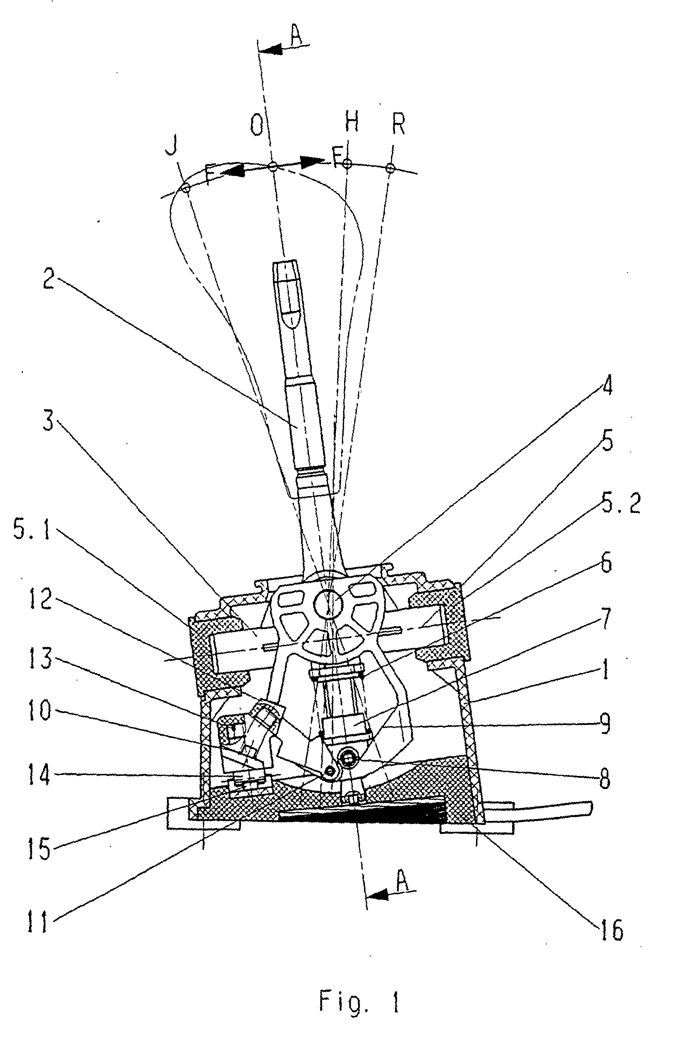

In **Figur 1** ist eine erfindungsgemäße Wählvorrichtung für ein Automatikgetriebe eines Kraftfahrzeuges dargestellt. In einem karosseriefesten Gehäuse 1 ist ein Wählhebel 2 mit einem Kreuzstück 3 auf einer Kreuzstückschwenkachse 5 gelagert. Die Kreuzstückschwenkachse 5 ist ihrerseits in Lagerbuchsen 5.1 und 5.2 in dem Gehäuse 1 aufgenommen.
Der Wählhebel 2 durchgreift das Kreuzstück 3 in axialer Richtung und ist in dem Kreuzstück 3 auf einem Bolzen 4 gelagert. Der Bolzen 4 ist orthogonal und räumlich versetzt zu der Kreuzstückschwenkachse 5 angeordnet.
In seinem unteren, dem Fahrzeugführer abgewandten Bereich, weist der Wählhebel 2 einen durch eine Druckfeder 6 abgestützten Schieber 7 mit daran befestigten Rastierrollen 8 auf Die Rastierrollen 8 stehen mit einer Gleitfläche 9.in einem bogenförmigen Bereich des Kreuzstückes 3 in Kontakt.
An dem bogenförmigen Bereich des Kreuzstückes 3 ist zudem eine durch Druckfedern 10 an dem Kreuzstück 3 abgestützte und um eine Achse 11 schwenkbare Klinke 12 vorhanden. Diese Klinke 12 ist in dem Ausführungsbeispiel zweischenkelig ausgebildet und nimmt zwischen ihren Schenkeln einen Teil des bogenförmigen Bereiches des Kreuzstückes 3 auf. Die Druckfedern 10 der Klinke 12 sind erfindungsgemäß sehr weich ausgeführt, weisen also eine geringe Federsteifigkeit auf.
Die Klinke 12 besteht ihrerseits aus einem geradlinig ansteigenden Bereich, der in einen nockenartigen Bereich übergeht, sodaß die Rastierrollen 8 zur Anwahl des Rückwärtsganges einen "oberen Totpunkt" überwinden müssen, bevor die Klinke rastend eingreift und somit den Wählhebel 2 festlegt. Da die Feder 10 eine geringe Federsteifigkeit aufweist, muß zur Positionierung des Wählhebels die Geometrie der Klinke 12, insbesondere des nockenartigen Bereiches so ausgeführt werden, daß der Wählhebel 2 in der Rückwärtsgangstellung festgehalten wird.

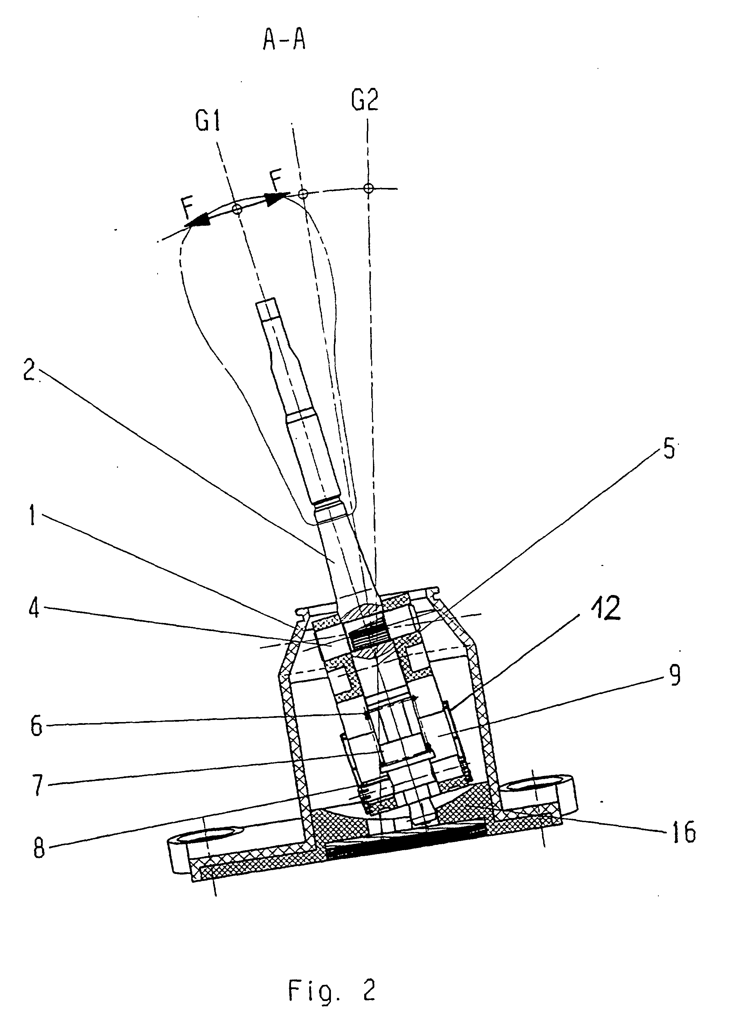

An dem Kreuzstück 3 ist ferner ein durch eine Druckfeder 13 abgestützter Rollenhalter 14 vorgesehen, der eine Rolle 15 aufnimmt. Die Rolle 15 steht mit einer profilierten Oberfäche einer Kulisse 16, die vorliegend gleichzeitig als Gehäuseunterteil ausgeführt ist, in Zusammenwirkung und bildet somit eine Rastierung. Dadurch wird gewährleistet, das der Wählhebel 2 während des Wählens der "Vorwärtsgänge" in einer ersten definierten Gasse G1 und für die Anwahl des "Rückwärtsganges" in einer zweiten definierten Gasse G2 positionierbar ist, wie auch aus der **Figur 2** hervorgeht.

Die Kulisse 16 hat in einer erfindungsgemäßen Wählvorrichtung eine Doppelfunktion. Einerseits ist sie mit der zuvor beschriebenen profilierten Oberfläche versehen, um eine Rastierung des Wählhebels 2 zu ermöglichen, andererseits wird das untere Ende des Wählhebels 2 in der Kulisse 16 geführt. Durch entsprechende Gestaltung des Kulisses 16 wird erreicht, daß der Rückwärtsgang nur in der ihm zugeordneten Gasse G2 anwählbar ist. Aus der Darstellung in **Figur 2** wird auch ersichtlich, daß der Schieber 7 sich federnd gegen den Wählhebel 2 abstützt und zwei Rasierrollen seitlich an dem Schieber 7 befestigt sind, die bei einer Bewegung des Wählhebels 2 aus seiner Neutralstellung heraus auf der Gleitfläche 9 des bogenförmigen Bereiches des Kreuzstückes 3 abrollen. Als Wählrichtung ist bei der Ausführungsform in der Zeichnung nur die Bewegung des Wählhebels 2 annähernd in Fahrzeuglängsrichtung möglich.
Die Lagerung des Wählhebels 2 erfolgt auf dem Bolzen 4 in dem Kreuzstück 3. Dabei liegt die Bolzenmittelachse des Bolzens 4 oberhalb der Kreuzstückschwenkachse 5.

Im Folgenden soll dem besseren Verständnis halber die Wirkungsweise einer erfindungsgemäßen, in der Zeichnung dargestellten Wählvorrichtung erläutert werden.

In der Grundstellung befindet sich der Wählhebel 2 in Gasse G1 in der mit 0 bezeichneten Stellung. Zur Anwahl der Fahrstufen wird der Wählhebel 2 um den Bolzen 4 im Kreuzstück 3 tippweise verschwenkt.
Die Rastierrollen 8 gleiten beziehungsweise rollen auf der Gleitfläche 9, die aufgrund ihrer ansteigenden Gestaltung bewirkt, daß der Wählhebel 2 nach dem Antippen wieder in die Ausgangsstellung 0 zurückkehrt. Der Wählhebel 2 ist mit seinem unteren Ende in einer Kulisse 16 geführt. Durch die Gestaltung der Kulisse 16 können die Rastierrollen 8 bei einer Bewegung des Wählhebels 2 in der Gasse G1 in Richtung H, die Klinke 12 nicht so weit herunterdrücken, daß diese zum Eingriff kommt.

Um den Rückwärtsgang anwählen zu können, verschwenkt der Fahrzeugführer den Wählhebel 2 aus der Stellung 0 heraus zusammen mit dem Kreuzstück 3 um die Kreuzstückschwenkachse 5 in die zweite Gasse G2, dabei sorgt die federabgestützte Rolle 15 zusammen mit der definiert profilierten Oberfläche der Kulisse 16, die zugleich das Gehäuseunterteil bildet, dafür, daß der Wählhebel 2 in dieser Gasse G2 arretiert wird.
Der Fahrzeugführer kann durch Verschwenken des Wählhebels 2 um den Bolzen 4 nun den Rückwärtsgang einlegen, die Rastierrollen 8 gleiten auf der Gleitfläche 9 über die Klinke 12 hinweg bis zur Rastierposition R.
Die Klinke 12 besteht aus einem geradlinig ansteigenden Bereich, der in einen nockenartigen Bereich übergeht, sodaß die Rastierrollen 8 zur Anwahl des Rückwärtsganges zunächst einen "oberen Totpunkt" überwinden müssen, bevor die Klinke rastend eingreift und somit den Wählhebel 2 festlegt

Um den Wählhebel 2 aus der Rastierposition R heraus zu bewegen, muß effindungsgemaß am Wählhebel 2 eine spürbar größere Kraft aufgewendet werden, als es bei den Fahrstufen für eine Vorwärtsfahrt der Fall ist. Der Wählhebel 2 wird aus der Rastierposition R heraus um den Bolzen 4 wieder in die Stellung 0 verschwenkt, wobei er zunächst den nockenartigen Bereich der Klinke überwinden muß. Die Rastierrollen 8 drücken auf die Klinke 12, diese wird um die Achse 11 verschwenkt, wobei die Druckfedern 10 entgegen ihrer Wirkungsrichtung belastet werden. Die Rastierrollen 8 des Schiebers 7 des Wählhebels 2 führen diesen wieder in die Stellung 0 zurück, allerdings in der Gasse G2.
Um wieder vorwärts fahren zu können, muß der Fahrzeugführer den Wählhebel 2 mit dem Kreuzstück 3 in die Gasse G1 verschwenken. Die Rolle 15 bewirkt dabei, daß der Wählhebel 2 in dieser Gasse G1 verbleibt.

Die vorgestellte erfindungsgemäße elektronisch gesteuerte Automatikschaltung für Getriebe von Kraftfahrzeugen bietet einen hohen Komfort, da über den Wählhebel keine Geräusche oder Schwingungen des Getriebes, wie es beispielsweise bei Gestängen oder Seilzügen der Fall ist, übertragen werden, sondern nur die Stellung des Wählhebels beispielsweise über Sensoren erfaßt und an das Getriebe weitergeleitet wird.
Das dem Fahrzeugführer wohlvertraute "Schaltgefühl" wird simuliert.

### Bezugszeichenliste

- 1: Gehäuse
- 2: Wählhebel
- 3: Kreuzstück
- 4: Bolzen
- 5: Kreuzstückschwenkachse
- 5.1: Lagerbuchse
- 5.2: Lagerbuchse
- 6: Druckfeder
- 7: Schieber
- 8: Rastierrolle
- 9: Gleitfläche
- 10: Druckfeder
- 11: Achse
- 12: Klinke
- 13: Druckfeder
- 14: Rollenhalter
- 15: Rolle
- 16: Kulisse

## Patentansprüche

1. Wählvorrichtung für ein Automatikgetriebe von Kraftfahrzeugen mit einem Gehäuse und einem in dem Gehäuse um eine erste Achse (5) schwenkbar gelagerten Kreuzstück (3), in dem ein um eine zweite Achse (4) schwenkbar gelagerter, das Kreuzstuck durchgreifender Wahlhebel (2) aufgenommen ist, wobei die Achsen annähernd orthogonal, jedoch räumlich versetzt zueinander angeordnet sind und federbelastete Rastmittel (6, 7, 8) an dem Wählhebel (2) mit einer ansteigenden Kontur (9) des Kreuzstückes (3) zusammenwirken,
**dadurch gekennzeichnet, daß**
die federbelasteten Rastmittel (6, 7, 8) an dem Wählhebel (2) mit einer an dem Kreuzstück (3) um eine Achse (11) gegen eine Federkraft schwenkbar gelagerten Klinke (12) zusammenwirken, wobei diese Klinke (12) einen in Schaltrichtung des Rückwärtsganges ansteigenden Bereich aufweist, der in einen nockenartigen, die federbelasteten Rastmittel (6, 7, 8) des Wählhebels (2) in der Rückwärtsgangstellung rastend hintergreifenden Bereich übergeht, wodurch der Wählhebel (2) nach Überwindung eines oberen Totpunktes in der Rückwärtsgangstellung festlegbar ist.

2. Wählvorrichtung für ein Automatikgetriebe von Kraftfahrzeugen nach Anspruch 1,
**dadurch gekennzeichnet, daß**
die federbelasteten Rastmittel (6, 7, 8) aus einem sich über eine Druckfeder (6) gegen den Wählhebel (2) abstützenden, in Bezug zu dem Wählhebel (2) axial beweglichen Schieber (7) und wenigstens einer an dem Schieber angebrachten Rastierrolle (8) bestehen.

3. Wählvorrichtung für ein Automatikgetriebe von Kraftfahrzeugen nach Anspruch 1,
**dadurch gekennzeichnet, daß**
die Klinke (12) an dem Kreuzstück (3) federnd positioniert ist.

## Claims

1. Selecting device for an automatic transmission of motor vehicles, with a housing and a crosspiece (3), which is mounted in the housing so as to pivot about a first axis (5) and in which a selector lever (2) is held, the latter being mounted so as to pivot about a second axis (4) and passing through the crosspiece, wherein the axes are disposed approximately orthogonally, yet staggered in space with respect to one another, and spring-loaded locking means (6, 7, 8) at the selector lever (2) co-operate with a rising contour (9) of the crosspiece (3),
**characterised in that**
the spring-loaded locking means (6, 7, 8) at the selector lever (2) co-operate with a pawl (12), which is mounted at the crosspiece (3) so as to pivot about an axis (11) against a spring force, wherein this pawl (12) comprises a region which rises in the shift direction of the reverse gear and which passes into a cam-like region which engages in locking fashion behind the spring-loaded locking means (6, 7, 8) of the selector lever (2) in the reverse gear position, whereby the selector lever (2) can be fixed in the reverse gear after overcoming a top dead centre.

2. Selecting device for an automatic transmission of motor vehicles according to Claim 1,
**characterised in that**
the spring-loaded locking means (6, 7, 8) consist of a slide (7), which is supported via a compression spring (6) against the selector lever (2) and is axially mobile relative to the selector lever (2), and at least one locking roller (8), which is applied to the slide.

3. Selecting device for an automatic transmission of motor vehicles according to Claim 1,
**characterised in that**
the pawl (12) is positioned resiliently at the crosspiece (3).

## Revendications

1. Dispositif de sélection pour une boîte de vitesses automatique de véhicules automobiles comportant un boîtier et une pièce en croix (3) montée dans le boîtier de manière à pouvoir pivoter autour d'un premier axe (5), dans lequel est logé un levier de sélection (2) traversant la pièce en croix et monté de manière à pouvoir pivoter autour d'un deuxième axe (4), les axes étant approximativement orthogonaux entre eux, mais décalés dans l'espace l'un par rapport à l'autre et des moyens d'encliquetage (6, 7, 8), soumis à l'action d'un ressort et disposés sur le levier de sélection (2), coopérant avec un contour (9) ascendant de la pièce en croix (3), **caractérisé en ce que** les moyens d'encliquetage (6, 7, 8), soumis à l'action d'un ressort, du levier de sélection (2) coopèrent avec un cliquet (12) monté sur la pièce en croix (3) de manière à pouvoir pivoter autour d'un axe (11), à l'encontre de la force d'un ressort, ce cliquet (12) présentant une zone ascendante dans le sens de commutation de la marche arrière, laquelle zone se prolonge par une zone de type came, qui passe derrière les moyens d'encliquetage (6, 7, 8), soumis à l'action d'un ressort, du levier de sélection (2), en les accrochant dans la position de marche arrière, ce qui fait que le levier de sélection (2) peut être fixé dans la position de marche arrière après dépassement d'un point mort haut.

2. Dispositif de sélection pour une boîte de vitesses automatique de véhicules automobiles selon la revendication 1, **caractérisé en ce que** les moyens d'encliquetage (6, 7, 8) soumis à l'action d'un ressort sont constitués d'un coulisseau (7) prenant appui contre le levier de sélection (2), par l'intermédiaire d'un ressort de compression (6), et déplaçable axialement par rapport au levier de sélection (2), et par au moins un galet d'accrochage (8) placé sur le coulisseau.

3. Dispositif de sélection pour une boîte de vitesses automatique de véhicules automobiles selon la revendication 1, **caractérisé en ce que** le cliquet (12) est positionné élastiquement sur la pièce en croix (3).
